# EUROPEAN PATENT APPLICATION

(11) **EP 1 270 166 A1**
(43) Date of publication of application: **02.01.2003**
(21) Application number: 02013733.7
(22) Date of filing: 20.06.2002
(51) Int. Cl.: B29C 37/02

(54) **Deflashing apparatus**

(30) Priority: 20.06.2001 JP 2001186951; 20.06.2001 JP 2001186979; 20.06.2001 JP 2001186993
(71) Applicant: NIHON PLAST CO., LTD., Fuji-shi, Shizuoka 417-0047 (JP)
(72) Inventor: Yamada, Satoshi, Fuji-shi, Shizuoka 417-0047 (JP)
(74) Representative: Grünecker, Kinkeldey, Stockmair & Schwanhäusser Anwaltssozietät

(57) **Abstract**

A deflashing apparatus includes a positioning device which positions a blade at a predetermined position of a molded article, a moving unit mounted to the positioning device for moving the blade along a parting line of the molded article, a pressing device mounted to the moving unit for guiding the moving unit linearly toward and away from the molded article and biasing the moving unit toward the molded article to bring the blade into contact with the molded article at a predetermined force, and a supporting device which supports and moves the molded article with respect to the blade.

## Description

### BACKGROUND OF THE INVENTION

The present invention relates to a deflashing apparatus for automatically removing flashes produced on molded articles.

When molding resin by using molding tools, the presence of a minute clearance in a matching portion of the tools causes flashes to occur on molded articles or products, deteriorating the product quality.

With the molding method wherein mixed liquid is injected and cured in the mold, particularly, in the area of reaction injection molding, mixed liquid often enters a minute clearance in the mating portion of the molds due to its extremely low viscosity, leading to possible occurrence of flashes corresponding to the mating portion of the mold called parting line.

In order to appropriately fill the mold with mixed liquid with low viscosity, it is necessary to leave no residual bubbles in a product portion. For this reason, to completely replace air in the mold with liquid resin, air together with part of mixed liquid is flashed out as flash along the parting line or an overflow trap. This requires a step for removing flashes from a molded article.

Moreover, since some resins such as polyurethane are susceptible to ultraviolet rays, they are sometimes formed with a protective layer or a barrier coating. However, according to such molding method called in-mold coating (IMC) method wherein a protective layer is preformed on the inner surface of the mold, then mixed liquid is injected in the closed mold to obtain an integral molding, finish machining is needed to remove also a residual portion of the protective film coated on the mating face of the molds. This requires a step for removing flashes from a molded article after molding. Typically, flashes produced on the molded article are removed manually, which takes time, however, raising problems such as low productivity and high product cost in mass-produced molded articles.

In order to solve such problems, JP-A 2001-18238 proposes a deflashing method and apparatus for molded articles of synthetic resin by using a robot arm.

However, since the deflashing method of the cited reference uses a robot arm, it is effective for removing strong and bulky flashes, but ineffective for thin film-like flashes produced on a molded steering wheel body and the like.

### SUMMARY OF THE INVENTION

It is, therefore, an object of the present invention to provide a deflashing apparatus which can remove flashes produced on molded articles, even with complicated shape, in an automatic and efficient way and at low cost.

The present invention provide generally an apparatus for deflashing a molded article having a parting line comprises: a blade; a positioning device which positions the blade at a predetermined position of the molded article; a moving unit mounted to the positioning device, the moving unit moving the blade along the parting line of the molded article; a pressing device mounted to the moving unit, the pressing device guiding the moving unit linearly toward and away from the molded article and biasing the moving unit toward the molded article to bring the blade into contact with the molded article at a predetermined force; and a supporting device which supports and moves the molded article with respect to the blade.

### BRIEF DESCRIPTION OF THE DRAWINGS

The other objects and features of the present invention will become apparent from the following description with reference to the accompanying drawings, wherein

FIG. 1 is a plan view showing a deflashing apparatus embodying the present invention;

FIG. 2 is a front view showing the deflashing apparatus;

FIG. 3 is an enlarged side view showing a blade moving unit provided to the deflashing apparatus:

FIG. 4 is a block diagram showing a control system for controlling the deflashing apparatus;

FIG. 5A is a view similar to FIG. 1, showing a molded article to be deflased by the deflashing apparatus;

FIG. 5B is a fragmentary perspective view showing the molded article with a section taken along the line VB-VB in FIG. 5A;

FIGS. 6A-6B are views similar to FIG. 5A, explaining operation of the deflashing apparatus;

FIG. 7 is a view similar to FIG. 5B, explaining operation of the deflashing apparatus;

FIG. 8 is a diagrammatic view for explaining operation of the deflashing apparatus;

FIG. 9 is a fragmentary enlarged view showing the tip of a deflashing blade used in the deflashing apparatus;

FIG. 10 is a view similar to FIG. 5B, showing a variation of the deflashing blade;

FIG. 11 is a view similar to FIG. 10, explaining operation of the deflashing apparatus; and

FIG. 12 is a sectional view showing a flash supporter.

### DETAILED DESCRIPTION OF THE INVENTION

Referring to the drawings, a deflashing apparatus embodying the present invention will be described.

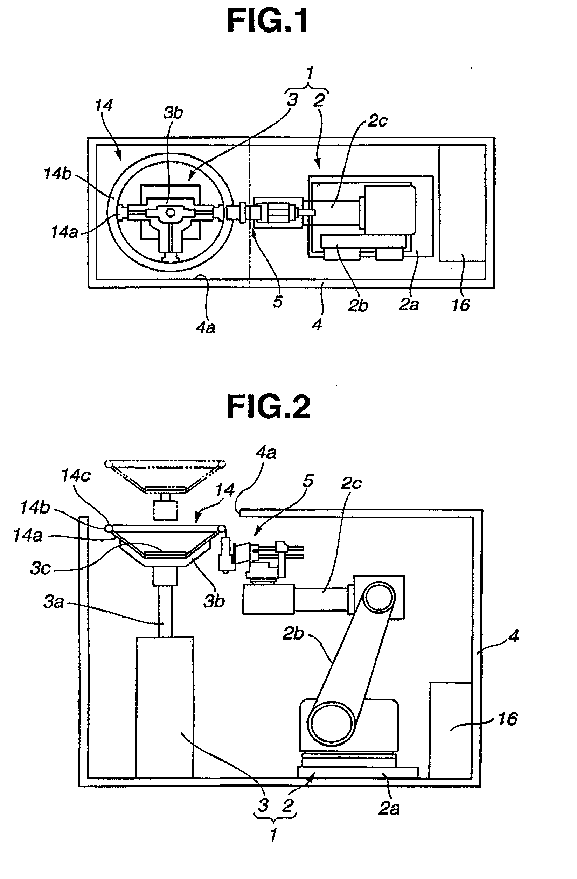

Referring to FIGS. 1-2, a deflashing apparatus 1 which comprises a blade positioning means 2 and a molded article supporting means 3 is arranged in a box-like casing 4 having on the top an opening 4a for loading and unloading of a molded article 14.

The blade positioning means 2 is constructed, for example, by a six-axis robot, and includes a base 2a, a first arm 2b having a lower end rotatably supported on the base 2a, and a second arm 2c having a base end rotatably supported to an upper end of the first arm 2b. A blade moving unit or hand 5 Is mounted to a top end of the second arm 2c.

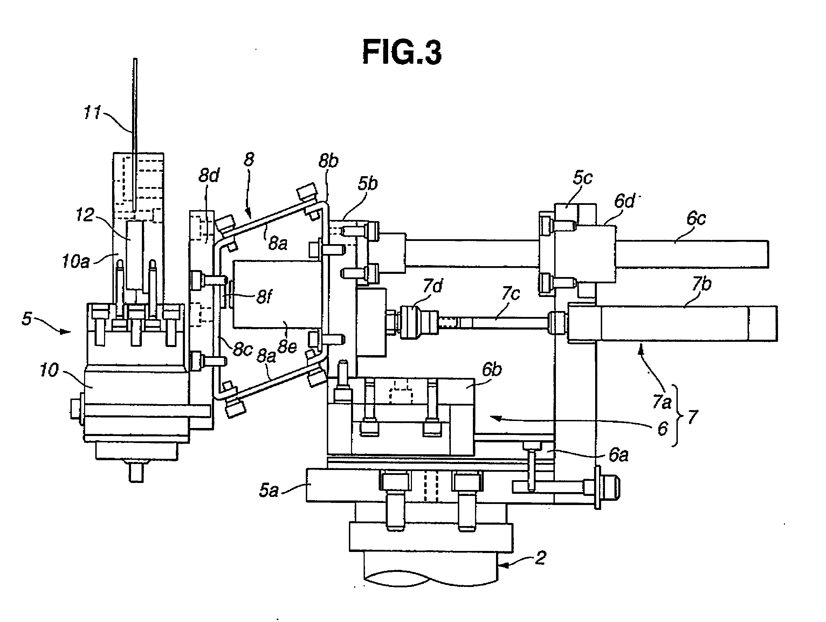

Referring to FIG. 3, the blade moving unit 5 includes a pressing means 7 comprising a guide means 6 and a hydraulic cylinder 7a.

The guide means 6 includes a guide rail 6a comprising an LM guide horizontally disposed on a base plate 5a of the blade moving unit 5 and a slide member 6b slidably supported on the guide rail 6a. A support member 5b is arranged on the slide member 6b, and has an upper portion to which a guide rod 6c extending horizontally is fixed. Another end of the guide rod 6c is slidably supported by a guide cylinder 6d provided at an upper portion of a pole 5c having a lower end fixed to the base plate 5a.

The hydraulic cylinder 7a is arranged parallel below the guide rod 6c. The hydraulic cylinder 7a comprises, for example, a low-friction pneumatic cylinder, wherein a piston rod 7c protrudes from a cylinder portion 7b horizontally fixed to the pole 5c, and has a tip connected to the support member 5b through a joint 7d. The hydraulic cylinder 7a allows the slide member 6b and the support member 5b to move linearly along the guide rail 6a toward or away from the molded article supporting means 3.

A vibration generating means 8 is mounted to the support member 5b on the surface opposite to the molded article supporting means 3. The vibration generating means 8 includes a pair of parallel links 8a formed out of an elastic plate such as leaf spring. The parallel links 8a have one end fixed to the support member 5b through a bracket 8b in such a way as to put their ends on the side of the support member 5b at a higher level, and another end fixed to a cutter mounting member 8d through a bracket 8c.

A vibration unit 8e having one end mounted to the support member 5b is interposed between the parallel links 8a. The vibration unit 8e comprises an electromagnetic vibrator having a predetermined vibration frequency such as 50Hz, and can provide vibration to a deflashing blade 11 as will be described later in the direction parallel to or crossing the direction of travel of the deflashing blade 11 by attracting or releasing a magnetic body 8f attached to the cutter mounting member 8d.

A turning means 10 comprising a rotary actuator is mounted, with a turning axis 10a facing upward, to the cutter mounting member 8d on the surface opposite to the surface to which the magnetic body 8f is attached.

A blade-like deflashing blade 11 having a sharp tip is detachably attached to the tip of the turning axis 10a of the turning means 10, and a heating means 12 for heating the deflashing blade 11 is provided in the turning axis 10a.

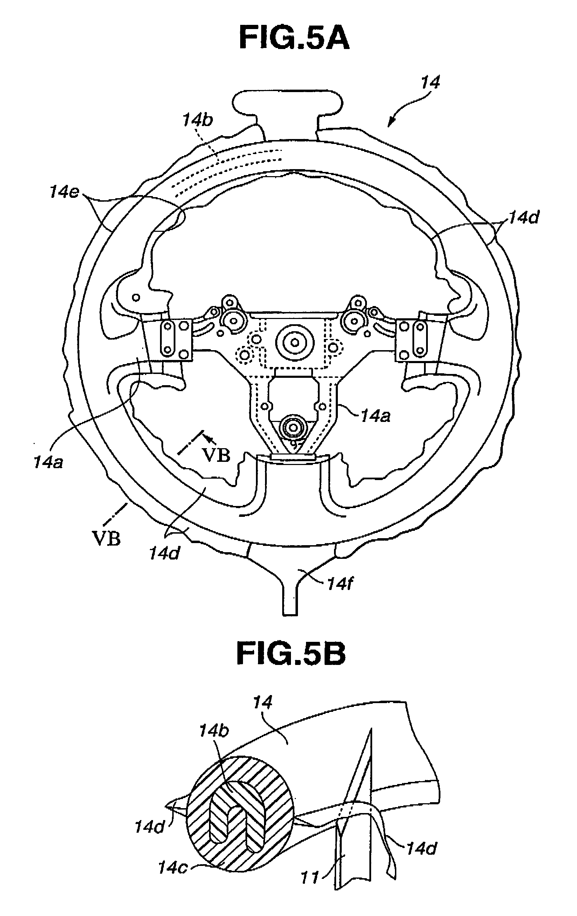

The molded article supporting means 3 for supporting the molded article 14 is constructed by a vertically movable and rotatable one-axis numerically controlled (NC) rotary table, and is vertically arranged in the casing 4. A roughly disk-like holder 3b is mounted to a vertically movable and rotatable support rod 3a at the tip protruding upward. A chuck 3c is arranged in the center of the holder 3b to allow holding of the center portion of the molded article 14 with a flash 14d (see FIG. 5A, for example) to be removed.

Referring to FIGS. 5A-5B, the molded article 14 is a steering wheel body having a spoke 14a of a predetermined shape such as T shape, wherein the whole of a ring-like rim 14b and part of the spoke 14a are covered with a coating layer 14c of synthetic resin such as polyurethane, and the flash 14d produced when forming the coating layer 14c is seen on the outer and inner peripheries of the coating layer 14c.

With the steering wheel body, in view of dimensional errors on the spoke 14a and the rim 14b, or contraction of the coating layer 14c in the circumferential direction of the rim 14b when forming the coating layer 14c, or improvement in operability of the steering wheel, the rim 14b is formed like an incomplete round ring.

For this reason, even if the molded article 14 is accurately fixed on the holder 3b, a parting line 14e with the flash 14d produced therealong is slightly shifted vertically or laterally when fuming molded article 14. Thus, even if the deflashing blade 11 is accurately positioned at an initial deflashing position of the molded article 14, the deflashing blade 11 is shifted from the parting line 14e when the molded article 14 is rotated by the molded article supporting means 3, causing incomplete elimination of the flash 14d along the parting line 14e or excessively deep cutting of the coating layer 14c by the deflashing blade 11, resulting in occurrence of a defective.

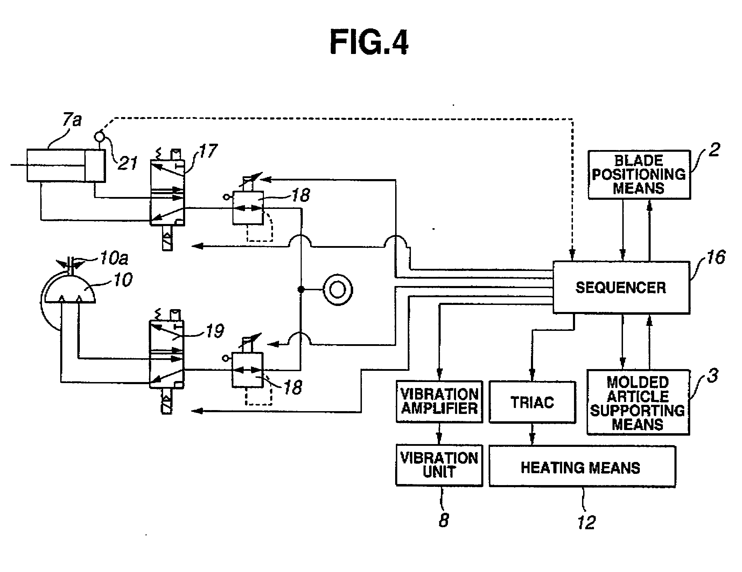

In this embodiment, therefore, referring to FIG. 4, a control system controls the blade positioning means 2 and the molded article supporting means 3 to automatically remove the flash 14d from the molded article 14.

A description will be made with regard to a method of automatically removing the flash 14d from the molded article 14 with the deflashing apparatus 1, together with control operation carried out by the control system.

Referring to FIG. 2, when removing the flash 14d from the molded article 14, the holder 3b is moved upward to the upper position shown by imaginary line, i.e. the position above the opening 4a of the casing 4 provided to secure the safety of an operator, to dispose the molded article 14 on the holder 3b of the molded article supporting means 3 in such a way as to set the rim 14b horizontally. And the center of the molded article 14 is held with the chuck 3c as shown in FIG. 1.

Referring to FIG. 2, when the holder 3b is moved downward from the position shown by imaginary line to the position shown by solid line, the blade positioning means 2 is controlled by a control means or sequencer 16 of the control system to move the blade moving unit 5 mounted at the tip of the second arm 2c to the vicinity of the molded article 14, positioning the deflashing blade 11 mounted to the blade moving unit 5 at the deflashing position of the molded article 14.

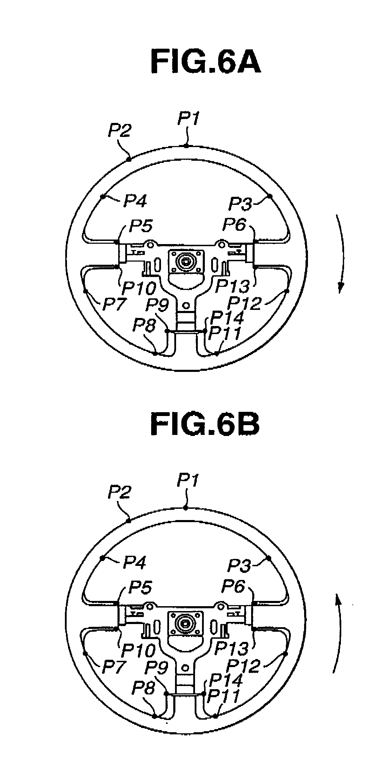

Specifically, referring to FIG. 6A, when starting removal of the flash 14d from a point P1 on the molded article 14, the deflashing blade 11 is positioned at the point P1.

In this state, a pressure control valve 17 connected to the pressing means 7 is controlled by the control means 16 to supply air of a predetermined pressure adjusted by a pressure regulating valve 18 to the hydraulic cylinder 7a of the pressing means 7, moving the support member 5b toward the molded article 14 by the pressing means 7 to bring the deflashing blade 11 into contact with the coating layer 14c at the point P1.

Then, in this state, the vibration generating means 8 is operated to vertically vibrate the deflashing blade 11 heated to a predetermined temperature such as 160°C by the heating means 12 such as an electric heater. Simultaneously, the molded article supporting means 3 is controlled by the control means 16 to rotate the molded article 14 rightward about 1.1 rotation or about 400°.

Thus, the flash 14d produced along the parting line 14e from the point P1 to a point P2 after making one circle therefrom is removed by the deflashing blade 11. During the deflashing process, if the deflashing blade 11 likely leaves from the coating layer 14c, the pressing means 7 is moved toward the coating layer 14c by the pressure within the hydraulic cylinder 7a, which is lowered accordingly.

The pressure within the hydraulic cylinder 7a is detected by a pressure sensor 21, which is always provided to the control means 16, so that if the pressure is lowered, the control means 16 controls the pressure control valve 17 to supply air to the hydraulic cylinder 7a until the pressure within the hydraulic cylinder 7a becomes within a predetermined pressure value range.

With this, the deflashing blade 11 always makes contact with the coating layer 14c at a constant pressure and will not leave from the coating layer 14c, so that even if the molded article 14 is varied dimensionally, or the coating layer 14c contracts in the circumferential direction, or the rim 14b is an incomplete round, complete removal of the flash 14d and uniformity of the deflashed surface can be achieved, obtaining an excellent finished surface.

If the coating layer 14c is intensively pressed against the deflashing blade 11, the pressure within the hydraulic cylinder is increased, which is, however, corrected by the pressure control valve 17 through the control means 16 to be within a predetermined pressure value range, preventing the deflashing blade 11 from biting the coating layer 14c, thus obtaining an excellent finished surface in the same way as described above.

After removing the flash 14d produced on the outer periphery of the coating layer 14c, removal is carried out for the flash 14d produced on the inner periphery of the coating layer 14c.

Referring to FIG. 6B. when removing the flash 14d produced on the inner periphery of the coating layer 4c, the blade positioning means 2 and the molded article supporting means 3 are controlled by the control means 16 to position the deflashing blade 11 so as to make contact with a point P3 on the coating layer 14c.

In this state, while the vibration generating means 8 applies vertical vibration to the deflashing blade 11, the molded article 14 is rotated clockwise by the molded article supporting means 3, removing the flash 14d to a point P4.

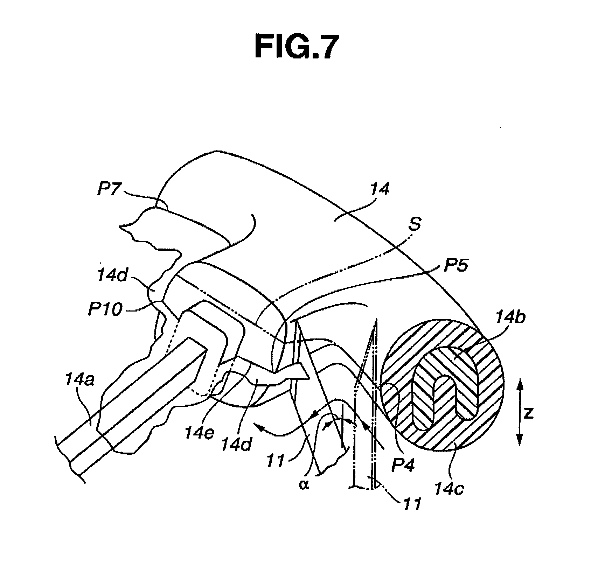

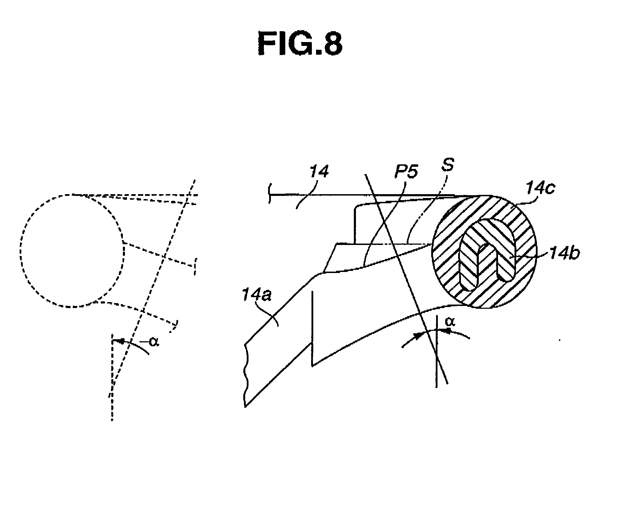

Referring to FIGS. 7-8, the parting line 14e of the spoke 14a is inclined as shown in FIG. 7, so that the deflashing blade 11 is positioned to extend downward of an imaginary line S shown in FIG. 8, which is a direct extension of the parting line 14e of the rim 14b.

Thus, when moving the deflashing blade 11 along the imaginary line S, deflashing operation is possible along the parting line 14e with the deflashing blade 11 set roughly perpendicularly or in the direction of arrow Z as shown in FIG. 7, for example. From the point P4 to a point P5, the deflashing blade 11 is moved with inclination of, for example, an angle α, allowing the deflashing blade 11 to make contact with the flash 14d at an appropriate and constant angle with respect to the cutting direction.

From the point P4 to the point P5, with rotation of the molded article supporting means 3 stopped, the blade positioning means 2 is controlled by the control means 16 to move the deflashing blade 11 along the parting line 14e so as to remove the flash 14d. Note that a portion of the molded article 14 from the rim 14b to the spoke 14a is formed like a small-diameter arc. When removing the flash 14d in that portion, while vibrating the deflashing blade 11 vertically, the pressure control valve 19 connected to the turning means 10 is controlled by the control means 16 to move the deflashing blade 11 along the spoke 14a and a curve of the inner periphery of the rim 4b in the vicinity thereof.

This allows complete removal of the flash 14d on the molded article 14 though complicated in shape.

After removing the flash 14d from the point P4 to the point P5, the blade positioning means 2 is controlled by the control means 16 to move the deflashing blade 11 to a point P7 for stopping. The molded article 14 is rotated clockwise by the molded article supporting means 3 to remove the flash 14d to a point P8.

After removing the flash 14d to the point P8, the blade positioning means 2 is controlled by the control means 16 to remove the flash 14d from the point PB to a point P9 in the same way as removal from the point P4 to the point P5.

Similar operation is repeatedly carried out to remove the flash 14d from a point P11 to a point P12 and from the point P12 to a point P13. Then, the deflashing blade 11 is reversed in the cutting direction by the fuming means 10, and simultaneously, it is moved to the point P4 by the blade positioning means 2. In this state, referring to FIG. 6B, the molded article 14 is rotated counterclockwise by the molded article supporting means 3 to carry out relative movement along the coating layer 14c already subjected to deflashing operation from the point P4 to the point P3 for refinishing of the deflashed surface.

Similar operation to that when removing the flash 14d by clockwise rotation of the molded article 14 is carried out to remove the remaining flash 14d from the point P3 to the point P6, from the point P12 to the point P11, from the point P11 to a point P14, from the point P8 to the point P7, and finally from the point P7 to the point P10. Then, the deflashing blade 11 is retuned by the blade positioning means 2 to the home position where it is away from the molded article 14, thus completing the deflashing process of the molded article 14.

In the way as described above, the flash 14d produced on the coating layer 14c of the molded article 14 is removed automatically. Due to deflashing operation carried out twice, i.e. during clockwise rotation of the molded article 14 and during counterclockwise rotation thereof in addition to seamless coating, the inner peripheral face of the coating layer 14c can be provided with a smoother deflashed surface.

The flash 14d produced on the molded article 14 positionally varies in thickness due to the configuration of the mold. Specifically, referring to FIG. 5A, the thickness is 1.5-2.0mm at a resin injecting portion or gate 14f, 1.0-1.2mm at an overflow portion, and 0.2-0.4mm at other portion (general portion).

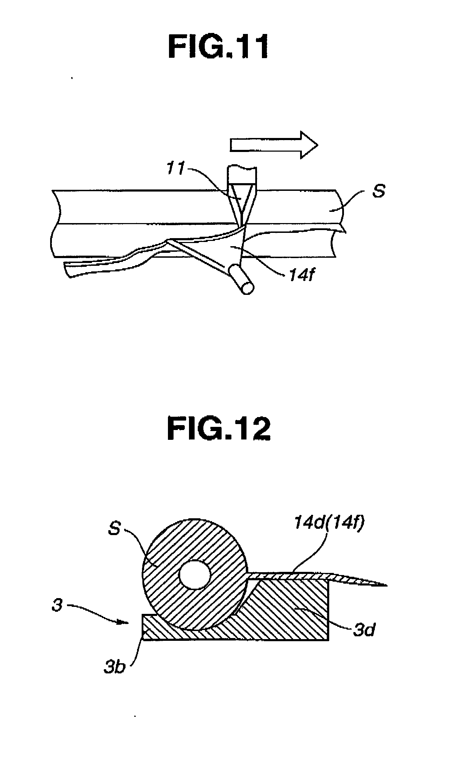

The flashes exist in the form of a small-thickness flash at the general portion and a different-thickness flash at the gate 14f and the overflow portion, so that, referring to FIG. 11, when deflashing operation is carried out from left to right as shown by arrow, the small-thickness flash 14d may be broken by the weight of the large-thickness flash 14d at the gate 14f, which can cause incomplete elimination of the flash 14d. The remaining flash 14d should be eliminated manually.

In view of such inconvenience, referring to FIG. 12, a flash supporter 3d is arranged adjacent to the holder 3b of the molded article supporting means 3 so as to support the flash 14d from below at the gate 14f and that at the overflow portion.

Loading of the molded article 14 onto the deflashing apparatus 1 is carried out by disposing the molded article 14 on the holder 3b of the molded article supporting means 3 in such a way as to set the rim 14b horizontally, and by holding the center of the molded article 14 with the chuck 3c. When the molded article 14 is steering wheel body S, and the rim 4b cannot always horizontally be set on the holder 3b due to welding distortion at a core bar and a boss, stable flash finishing may not be carried out.

Thus, in order to enable correction of face and center deflections due to welding distortion, the center or boss of the molded article 14 is held with the chuck 3c, which is then moved downward so as to set the rim 14b on the holder 3b horizontally. This allows secure positioning of the molded article 14 at the rim 14b, obtaining correction of face and center deflections due to welding distortion, resulting in stable flash finishing.

In the above control, the hydraulic cylinder 7a constituting the pressing means 7 which brings the deflashing blade 11 into contact with the coating layer 14c is controlled at a relatively low air pressure of 0.5-1.5kgf/cm², and it includes a low-friction cylinder, achieving improved response-ability when the deflashing blade 11 is moved along the surface of the coating layer 14c.

Although the molded article supporting means 3 carries out absolutely simple rotating motion, and the blade positioning means 2 carries out relatively complicated motion, net movement of the deflashing blade 11 provided to the blade positioning means 2 is limited to a very narrow range corresponding to only a fraction of the size of the molded article 14.

Specifically, once the deflashing blade 11 is moved from the home position to the position where it abuts on the molded article 14, its movement only in a very narrow range can complete removal of the flash 14d, leading to greatly facilitated control of the blade positioning means 2 and remarkably reduced loss of time required for movement between the motion points.

Referring to FIG. 8, the deflashing blade 11 always operates on the right side of the molded article or steering wheel body 14 as viewed in FIG. 8 with respect to the center of rotation thereof. Therefore, the deflashing blade 11 only needs to have always a deflection angle in the positive direction, such as angle α. This ensures operation of the deflashing blade 11 without large operative difference even if a slight difference exists between the inclination of the horizontal spoke 14a and the vertical spoke 14a, for example, enabling teaching of the blade positioning means 2 in accordance with essentially common operation.

Likewise, for operation of the deflashing blade 11 on the opposite side of the spoke 14a, i.e. from the point P4 to the point P5, the deflashing blade 11 only needs to have a deflection angle of α.

When deflashing operation is carried out on the left side of the steering wheel body 14 shown by broken line in FIG. 8 with respect to the center of rotation thereof, operation of the deflashing blade 11 is greatly different from operation on the right side of the steering wheel body 14, and thus the deflashing blade 11 needs to have a deflection angle in the negative direction or-α.

The deflashing blade 11 is formed, for example, out of BM-1P (material: SKS, manufactured by NT Cutter Co.) which is a triangular blade with edge angle of about 20° or a typical razor blade (material: so-called Gin Roku) with edge angle of 14.5°. When the coating layer 14c is polyurethane, it is heated to 160°C by the heating means 12, since the deflashing efficiency is greater at high temperature than at ordinary temperature. However, if the coating layer 14c includes other material, or the stiffness or the thickness of the flash 14d varies, the heating temperature can be set accordingly.

The deflashing efficiency is generally enhanced by applying vibration to the deflashing blade 11. Thus, in this embodiment, application of vibration is carried out by using the electromagnetic vibration generating means 8, wherein the amplitude of vibration is in the range of about 1 to 0.001mm, and the frequency is in the range of about 10 to 100KHz (50Hz in this embodiment). Optionally, higher frequency may be applied by using an ultrasonic vibration generating means.

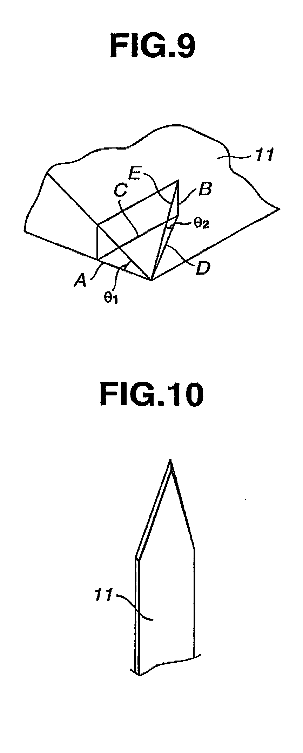

Table 1 shows the relationship between the edge shape of the deflashing blade 11 (see FIG. 9) and the frequency and amplitude of vibration to be applied to the deflashing blade 11, wherein the means for generating vibration of 50Hz includes electromagnetic vibrator, the means for generating vibration of 675Hz includes pneumatic vibrator, and the means for generating vibration of 22,000Hz frequency includes ultrasonic generator.

**Table 1**

| Case No. | | 1 | 2 | 3 | 4 | 5 | 6 |
|---|---|---|---|---|---|---|---|
| Tool type | | BM-1P | | | Razor blade | | |
| Frequency | F (Hz) | 50 | 675 | 22,000 | 50 | 675 | 22,000 |
| Amplitude | C (mm) | 1 | 0.5 | 0.07 | 1 | 0.5 | 0.07 |
| Edge angle | θ1(°) | 20 | ← | ← | 14.5 | ← | ← |
| Working speed | V (mm/sec) | 120 | ← | ← | ← | ← | ← |
| Side length (relative ratio) | A | 1.00 | 0.08 | 0.00 | 1.00 | 0.08 | 0.00 |
| | B | 0.37 | 0.03 | 0.00 | 0.26 | 0.02 | 0.00 |
| | D | 1.30 | 0.43 | 0.06 | 1.30 | 0.43 | 0.06 |
| | E | 1.35 | 0.43 | 0.06 | 1.33 | 0.43 | 0.06 |
| Edge angle | θ2(°) | 15.62 | 3.65 | 0.81 | 11.24 | 2.59 | 0.58 |
| Edge-angle ratio | θ2/θ1 | 0.78 | 0.18 | 0.04 | 0.77 | 0.18 | 0.04 |

As is clear from Table 1, due to the relationship between the edge angle θ1, the edge moving speed V, and the vibration frequency "f", the specific angle θ1 of the edge directly acts on deflashing operation if no vibration is provided to the deflashing blade 11. On the other hand, application of vibration to the deflashing blade 11 increases the acuteness of the substantial angle θ2, which improves the sharpness of the deflashing blade 11, resulting in smoothness of the deflashing trace and great increase in number of molded articles 14 which can be worked by one blade.

Consider deflashing trace when deflashing operation of the molded articles 14 is carried out under the same conditions except application of vibration. When no vibration was applied to the deflashing blade 11, irregular deflashing trace occurred from the second molded article 14, which renders them defective. On the other hand, when 22,000Hz vibration was applied thereto, no irregular deflashing trace occurred up to the twentieth molded article 14.

In such a way, the number of molded articles 14 which can be worked by one deflashing blade 11 is greatly increased, resulting in decreased consumption of the deflashing blade 11. Moreover, the deflashing blade 11 is replaced manually with the deflashing apparatus 1 stopped, and it is vibrated for deflashing operation, resulting in enhanced availability of the apparatus. Further, the number of apparatus controlled by an operator can be increased, leading to an improvement in labor cost. Furthermore, the number of replacements of the deflashing blade 11 can be reduced, there is no need to consider automatic replacement of the deflashing blade 11, leading to a reduction in manufacturing cost of the apparatus.

In the illustrative embodiment, so-called passive control is adopted wherein a force of the coating layer 14c for pushing back the deflashing blade 11 is captured as an inner-pressure change within the hydraulic cylinder 7a for stabilization. Optionally, so-called active control may be adopted wherein a pattern of an inner-pressure change is preprogrammed as a standard value to supply or discharge air in accordance with motion of the molded article 14. In this variation, the standard value is set to be smaller than a required value, and an insufficient pressure is obtained by detecting a difference therebetween to achieve a constant pressure.

Note that the rim 14b of the steering wheel or molded article 14 is an incomplete round with slight variation in diameter in the circumferential direction, which is a trend specific to the product resulting from the design based on the ergonomics.

This involves that the deflashing point at a particular position in the direction of rotation has a particular pattern. Thus, control of the pressing means 7 in accordance with this pattern allows cancellation or complete elimination of an influence of friction and the like.

Addition of the learning function allows statistic processing of a dispersion in shape of the molded articles 14 and real-time correction of its standard value. Therefore, the use of active control can provide a secondary effect that the working accuracy enhances as the quantity of production increases.

Moreover, in the illustrative embodiment, the single-edged deflashing blade 11 is used as shown in FIG. 5B. Alternatively, a double-edged deflashing blade 11 may be used as shown in FIG. 10.

Further, in the illustrative embodiment, when removing the flash 14d of the molded article 14, the deflashing blade 11 is moved in two distinct movements from the point P3 to the point P4 and from the point P4 to the point P5. Alternatively, the deflashing blade 11 may be moved in single and continuous movement from the point P3 through the point P4 to the point P5. Moreover, when fuming the molded article 14 to the point P4, the flash 14d can be removed with the deflashing blade 11 stopped, and from the point P4 to the point P5, it can be removed by operating the blade positioning means 2 in accordance with signals for operation of the molded article supporting means 3 which is being rotated. In this variation, execution of single and continuous movement of the deflashing blade 11 allows continuous removal of the flash 14d on the deflashing of the molded article 14, obtaining smoother finished surface thereof. This also allows a reduction in size of the apparatus due to achievement of a narrower moving range of the blade positioning means 2.

Still further, the deflashing apparatus 1 may further include a grinding means for grinding the deflashing blade 11. This allows preservation of the sharpness of the deflashing blade 11, resulting in higher-quality molded article 14 with no residual flash 14d. Moreover, preservation of the sharpness of the deflashing blade 11 can be preserved for the long term without replacement, resulting in elongated cycle of replacement. This contributes to an improvement in productivity due to no stopping of the deflashing apparatus 1 for replacement of the deflashing blade 11. Further, alternate execution of the deflashing process of the molded article 14 and the grinding process of the deflashing blade 11 allows further improvement in productivity.

Furthermore, in the illustrative embodiment, the hydraulic cylinder 7a serves to press the deflashing blade 11 against the molded article 14, the inner pressure of which is detected to obtain a predetermined pressing force. Optionally, an electric actuator including, for example, a servomotor may be used with a distortion sensor, wherein drive of the former is controlled in accordance with electric signals of the latter.

As described above, according to the present invention, it allows removal of the flash by moving the blade along the periphery of the molded article, leading to easy and secure removal of the flash produced on the molded article even with the complicated shape. Moreover, removal is possible without using a blade of the particular shape, leading to complete elimination of the flash and reduction in running cost

Removal of the flash can be carried out by moving the molded article with respect to the blade by the supporting device, resulting in efficient and short-time operation. Such deflashing operation ensures an excellent deflashed surface of the molded article, and is thus applicable, preferably, to molded articles to be gripped during application, such as a steering wheel, due to no evocation of uncomfortable feel.

The blade can securely be brought into contact with the flash on the molded article by the pressing device, producing no residual flash. The hydraulic cylinder is in the form of a low-friction pneumatic cylinder, resulting in improved fellow-ability of the blade with respect to the molded article surface with flash produced.

Moreover, according to the present invention, the blade comprises a single-edged blade and a double-edged blade, and the moving unit moves the blade in one of a first direction and a second direction opposite to the first direction with respect to the molded article. This allows removal of the flash during reciprocation of the blade without needless motion, resulting in shortened working time. Moreover, selective setting is possible between the working direction desirable for one area of the molded article and that desirable for another area but that undesirable for the one area, resulting in more efficient working.

Further, according to the present invention, the hydraulic pressure within the hydraulic cylinder is detected to feedback control the hydraulic cylinder in such a way that the hydraulic pressure is within a predetermined value range. This allows the blade to be pressed against the molded article at an appropriate pressure by the hydraulic cylinder, preventing incomplete elimination of the flash and excessively deep cutting of the molded article by the blade, leading to achievement of an excellent finished surface and reduction in occurrence of a defective due to deep cutting of the molded article.

Still further, according to the present invention, the hydraulic pressure is changed using a program prepared in accordance with a shape of the molded article, wherein the hydraulic cylinder is controlled to correct by the hydraulic pressure a difference between the changed hydraulic pressure and the detected hydraulic pressure. Thus, even if the molded article is varied dimensionally, removal of the flash can be carried out by correcting the pressing force between the blade and the molded article in accordance with the variation, improving the follow-ability of the blade, resulting in accurate deflashing operation.

Furthermore, according to the present invention, the molded article has a circular portion, wherein the supporting device rotates the molded article about a center of the circular portion to carry out relative movement of the blade. This allows simple and rational motion of the molded article through the circular portion, leading to efficient removal of the flash.

Further, according to the present invention, the apparatus further comprises a vibration device mounted to the moving unit for providing vibration to the blade, wherein vibration is carried out in one of directions parallel to and crossing a direction of travel of the blade. Thus, efficient removal of the flash and enhancement of the quality of the finished surface can be achieved through the vibrating blade.

Still further, according to the present invention, the apparatus further comprises a turning device mounted to the moving unit for turning the blade in a direction of travel of the blade, which contributes to easy turning of the blade.

Furthermore, according to the present invention, the apparatus further comprises a heating device for heating the blade and a supporter arranged adjacent to the supporting device for supporting the flash from below. The heating device contributes enhancement of the deflashing efficiency, whereas the supporter contributes to prevention of the small-thickness flash from being broken by the weight of the large-thickness flash, and thus prevention of incomplete elimination of the flash.

Having described the present invention with regard to the preferred embodiment, it is noted that the present invention is not limited thereto, and various changes and modifications can be made without departing from the scope of the present invention.

The entire teachings of Japanese Patent Application P2001-186951 filed June 20, 2001, Japanese Patent Application P2001-186979 filed June 20, 2001, and Japanese Patent Application P2001-186993 filed June 20, 2001 are incorporated hereby by reference.

## Claims

1. An apparatus for deflashing a molded article having a parting line, comprising:
a blade;
a positioning device which positions the blade at a predetermined position of the molded article;
a moving unit mounted to the positioning device, the moving unit moving the blade along the parting line of the molded article;
a pressing device mounted to the moving unit, the pressing device guiding the moving unit linearly toward and away from the molded article and biasing the moving unit toward the molded article to bring the blade into contact with the molded article at a predetermined force; and
a supporting device which supports and moves the molded article with respect to the blade.

2. The apparatus as claimed in claim 1, wherein the blade comprises a single-edged blade and a double-edged blade.

3. The apparatus as claimed in claim 1, wherein the moving unit selectively moves the blade along the parting line in a first direction and a second direction opposite to the first direction.

4. The apparatus as claimed in claim 1, wherein the pressing device comprises a guide and a hydraulic cylinder, wherein a hydraulic pressure within the hydraulic cylinder is detected to feedback control the hydraulic cylinder in such a way that the hydraulic pressure is within a predetermined value range.

5. The apparatus as claimed in claim 4, wherein the hydraulic pressure is changed using a program prepared in accordance with a shape of the molded article, wherein the hydraulic cylinder is controlled to correct therein the hydraulic pressure by a difference between the changed hydraulic pressure and the detected hydraulic pressure.

6. The apparatus as claimed in claim 1, wherein the supporting device comprises a vertically movable and rotatable one-axis numerically controlled (NC) rotary table.

7. The apparatus as claimed in claim 1, wherein the molded article has a circular portion, wherein the supporting device rotates the molded article about a center of the circular portion to carry out relative movement of the blade.

8. The apparatus as claimed in claim 1, further comprising a vibration device mounted to the moving unit for providing vibration to the blade.

9. The apparatus as claimed in claim 8, wherein the vibration device comprises a pair of parallel links and a vibration unit interposed between the parallel links.

10. The apparatus as claimed in claim 8, wherein the vibration is carried out in one of directions parallel to and crossing a direction of travel of the blade.

11. The apparatus as claimed in claim 9, wherein the vibration unit comprises an electromagnetic vibrator, a pneumatic vibrator, and an ultrasonic vibrator.

12. The apparatus as claimed in claim 1, further comprising a turning device mounted to the moving unit for turning the blade in a direction of travel of the blade.

13. The apparatus as claimed in claim 1, further comprising a heating device for heating the blade and a supporter arranged adjacent to the supporting device for supporting the flash from below.

14. An apparatus for deflashing a molded article having a parting line and a coating layer, comprising:
a blade;
a positioning device which positions the blade at a predetermined position of the molded article;
a moving unit mounted to the positioning device, the moving unit moving the blade along the parting line of the molded article;
a pressing device mounted to the moving unit, the pressing device guiding the moving unit linearly toward and away from the molded article and biasing the moving unit toward the molded article to bring the blade into contact with the molded article at a predetermined force; and
a supporting device which supports and moves the molded article with respect to the blade,
whereby the coating layer Is simultaneously finished along the parting line.

15. An apparatus for deflashing a molded article having a parting line, comprising:
a blade;
means for positioning the blade at a predetermined position of the molded article;
means mounted to the positioning means for moving the blade along the parting line of the molded article;
means mounted to the moving means for guiding linearly the moving means toward and away from the molded article and biasing the moving means toward the molded article to bring the blade into contact with the molded article at a predetermined force; and
means for supporting and moving the molded article with respect to the blade.

16. An apparatus for deflashing a molded steering wheel body having a parting line and a rim portion including at least one spoke portion protruding from the rim portion, the rim portion having outer and inner peripheries, the apparatus comprising:
a blade;
a positioning device which positions the blade at a predetermined position of the steering wheel body;
a moving unit mounted to the positioning device, the moving unit moving the blade along the parting line of the steering wheel body;
a pressing device mounted to the moving unit, the pressing device guiding the moving unit linearly toward and away from the steering wheel body and biasing the moving unit toward the steering wheel body to bring the blade into contact with the steering wheel body at a predetermined force;
a supporting device which supports and moves the steering wheel body with respect to the blade; and
an electronic control unit (ECU) which controls the positioning device and the supporting device, the ECU being programmed to move the blade along the inner periphery of the rim portion, the blade being subjected to motions from a first position on the inner periphery of the rim portion to a head of the at least one spoke portion on one side, and then from a second position on the inner periphery of the rim portion to the head of the at least one spoke portion on another side.

17. The apparatus as claimed in claim 16, wherein the motions of the blade are carried out in an overlapped way.

18. The apparatus as claimed in claim 16, the inner periphery of the rim portion being divided into a plurality of areas by the at least one spoke portion, wherein the motions of the blade are carried out in each of the plurality of areas.

19. The apparatus as claimed in claim 18, wherein the motions of the blade are carried out along 1) the outer periphery of the rim portion, 2) the inner periphery of the rim portion in the first area, 3) the at least one spoke portion in the first area, 4) the inner periphery of the rim portion in the second area and, 5) the at least one spoke portion in the second area.
